# EUROPEAN PATENT SPECIFICATION

(11) **EP 1 640 234 B1**
(45) Date of publication and mention of the grant of the patent: **19.05.2010**
(21) Application number: 05020959.2
(22) Date of filing: 26.09.2005
(51) Int. Cl.: B60W 40/06, B60W 10/02

(54) **Shift change control device for automatic transmission**
Gesteuerte Getriebeschalteinrichtung eines automatischen Getriebes
Dispositif de commande de changement de vitesses pour transmission automatique

(30) Priority: 28.09.2004 JP 2004282413
(43) Date of publication of application: 29.03.2006
(73) Proprietor: AISIN SEIKI KABUSHIKI KAISHA, Kariya-shi, Aichi-ken 448-8650 (JP)
(72) Inventor: Mineno, Akira IPD Aisin Seiki Kabushiki Kaisha, Kariya-shi Aichi-ken 448-8650 (JP)
(74) Representative: Kramer - Barske - Schmidtchen

(56) References cited:
- US-A- 4 361 060

## Description

### FIELD OF THE INVENTION

This invention relates to a shift change control device for an automatic transmission, and more particularly to a shift change control device for an automatic transmission, which can change shift stage of the transmission with optimal shift change timing by detecting a vehicle condition.

### BACKGROUND OF THE INVENTION

An automated manual transmission device (hereinafter called as AMT) has been developed and is now actually used in the market. This AMT is formed by using an already existing manual transmission to which an actuator is attached to automatically achieve series of shift change operations such as clutch operation, selecting operations, and gear shifting in accordance with a driver's intention or a vehicle condition. This AMT has two modes of operations, manual shifting mode and automatic shifting mode. When the operation mode is selected to the automatic shifting mode by a shift lever, a shift stage (a shift stage gear train) is automatically up-shifted or down-shifted based on an accelerator pedal depression amount (throttle valve opening degree) and a vehicle speed.

However, even if the depression amount and the vehicle speed are the same, the vehicle condition at that time is different. For example, with the same accelerator pedal depression amount, there is a case that an accelerator pedal is depressed or a case that the accelerator pedal is released. Further, a condition of the factors surrounding the vehicle, such as road inclination condition has to be considered. If an up-shifting is automatically made regardless of the driver's intent, such shifting may give the driver an uncomfortable feeling. Accordingly, a reference patent document 1 discloses an AMT for a vehicle wherein the timing of shifting can be correctable considering the accelerator pedal depression amount or the speed of depression, etc.
Reference Patent Document 1: JP 2002-156036A

In any event, the method for determining the shifting (shift change timing) based on the accelerator pedal depression amount and the vehicle speed is not directly associated with the vehicle condition that the driver observes or feels. Accordingly, the correction starting timing or cancellation timing of the shifting does not match with the driver's intention or the actual vehicle condition. For example, according to the reference patent document 1, a timer controls the cancellation of correction timing. The timing of correction cancellation is performed assuming a regular or a standard operation or a vehicle condition. This does not necessarily correspond to the driver's intention or the actual vehicle condition.

US 4,361,060 discloses an electronic control system for a mechanical automatic transmission according to the preamble of claim 1. The control system receives operator commands regarding the mode of transmission operation (either automatic or manual) and monitors throttle position, engine speed, transmission countershaft speed , drive shaft (vehicle) speed and rates of change of these speeds. Utilizing this information, the electronic control system selects an optimum transmission gear ratio and effects synchronization of the selected transmission gear elements. Finally, based on these parameters clutch engagement is controlled.

### SUMMARY OF THE INVENTION

The invention thus pertains to a shift change control device for an automatic transmission, which can control the timing of shift change to agree with a driver's intention based on the vehicle condition. This object is solved by a shift stage control device comprising the features of claim 1 or 9. Preferred embodiments are defined by the dependent claims.

According to one aspect of the invention, a shift change control device for an automatic transmission includes an automatic clutch mechanism having a clutch and a clutch actuator for actuating the cutch release and engaging operations, a shift change actuator for actuating shift change of the automatic transmission, a control portion for controlling the automatic clutch mechanism and the automatic transmission by driving the clutch actuator and the shift change actuator, wherein the control portion controls the shift change by deciding a target shift stage based on at least three parameters which are the combination of an accelerator pedal depression amount, a vehicle speed, a vehicle acceleration, a road inclination and a time rate of change of acceleration (jerk) and which include at least one of the accelerator pedal depression amount, the vehicle speed and the vehicle acceleration and at least one of the road inclination and the time rate of change of acceleration.

According to a second aspect of the invention the shift change control device, wherein the control portion includes a shift change map including a threshold line for judging whether a shift change from a certain shift stage to another is necessary or not by using at least two shift change selection parameters from the accelerator pedal depression amount, the vehicle speed and the vehicle acceleration, whereby the control portion judges whether a shift change is necessary or not by calculating a correction amount based on at least one shift change parameter value of the road inclination and the time rate of change of acceleration, multiplied by a correction coefficient "k" and adding the correction amount to an actual value relating to the shift change selection parameters or by shifting the threshold line to an upper shift stage side by the correction amount. According to a third aspect of the invention, the shift change control device includes the control portion which includes the shift change map for judging whether a shift change from a certain shift stage to another is necessary or not by using the accelerator pedal depression amount and the vehicle shift stage and at least one correction map which determines increase of the correction amount to be applied based on the degree of the road inclination, whereby the control portion judges whether a shift change is necessary or not by adding the correction amount to the actual value relating to the shift change selection parameters or by shifting the threshold line to the upper shift stage side by the corrected amount using the correction map.

According to a fourth aspect of the invention, the control portion includes the shift change map for judging whether a shift change from a certain shift stage to another is necessary or not by using the accelerator pedal depression amount and the vehicle speed and at least one correction map which determines a relationship of increase of the correction amount applied in the same direction in accordance with an increase in a positive direction or a decrease in a negative direction of at least one of the shift change correction parameters of the road inclination and the change ratio of the acceleration, whereby the control portion judges whether a shift change is necessary or not by adding the corrected amount to the actual value relating to the shift change selection parameters or by shifting the threshold line to the upper shift stage by the corrected amount using the correction map.

According to a fifth aspect of the invention, the control portion sets a first predetermined value β1 and a second predetermined value β2 which absolute value is smaller than the first predetermined value for the road inclination value and changes a shift stage to lower shift stage by one shift stage when the road inclination θ exceeds the first predetermined value β1 or is between the first predetermined value with a negative value and the second predetermined value with a negative value.

### BRIEF DESCRIPTION OF THE DRAWINGS

The foregoing and additional features and characteristics of the present invention will become more apparent from the following detailed description considered with reference to the accompanying drawings, wherein:
Figure 1 is a drawing of an outline configuration of a vehicle system for purposes of explaining an embodiment of the present invention;
Figure 2 is a drawing illustrating a change of shift stage curve as applicable in the case of an automatic transmission;
Figure 3 is a flow chart for purposes of explaining the operations of the shift change control device of an automatic transmission in the first embodiment of the present invention;
Figure 4 is a drawing illustrating a correction map (degree of acceleration of a vehicle-correction amount of vehicle speed) used in a second embodiment of the present invention;
Figure 5 is a drawing illustrating a correction map (inclination of a road-correction amount of vehicle speed) used in the second embodiment of the present invention;
Figure 6 is a drawing illustrating a correction map (inclination of a road-correction amount of vehicle speed) used in the second embodiment of the present invention;
Figure 7 is a drawing illustrating a correction map (degree of change in the degree of acceleration of a vehicle--correction amount of vehicle speed) used in the second embodiment of the present invention;
Figure 8 is a flow chart for purposes of explaining the operations of shift change control device of an automatic transmission in the second embodiment of the present invention.
Figure 9 is a drawing illustrating correction of the shift change map in the second embodiment of the present invention; and,
Figure 10 is a drawing illustrating the effects or advantages of the second embodiment of the present invention.

### DETAILED DESCRIPTION OF THE EMBODIMENTS

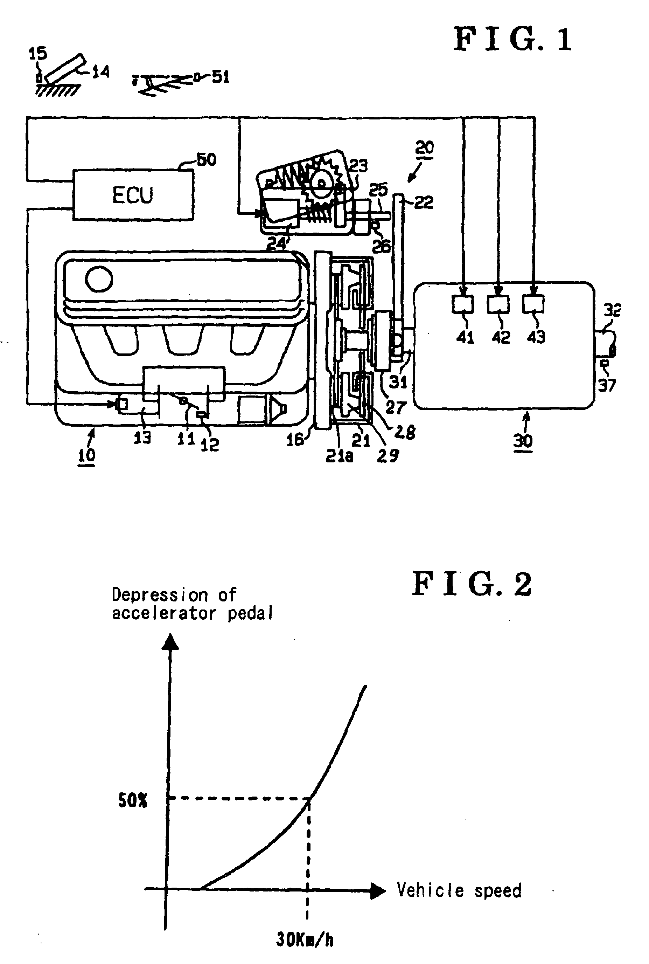

Next, a detailed explanation will be given concerning the first embodiment of the present invention with reference to the drawings. Figure 1 is a drawing of a structural outline of a vehicle system in accordance with the first embodiment. In Figure 1 an automatic clutch 20 is attached to the output axle (crankshaft) of an engine 10, and an automatic transmission 30 is connected by means of the automatic clutch 20.

The engine 10 is provided with a throttle valve 11 that adjusts a degree of air intake; a throttle sensor 12 for detecting a degree of opening of the throttle valve 11 (throttle opening degree); and a throttle actuator 13 for driving the opening and closing of the throttle valve 11.

The automatic clutch 20 is provided with a mechanical-type friction clutch 21 (dry single plate type), a clutch lever 22 (release fork), and a clutch actuator 23 for carrying out rotational torque transmission by means of the friction clutch 21, through the clutch lever (release fork) 22.

The friction clutch 21 is provided with a clutch disc 21a that rotates integrally with the input axle (input shaft) 31 of the automatic transmission 30. By adjusting a degree of pressing load imposed by the clutch disc 21a on the flywheel 10a, the friction clutch 21 is capable of increasing and decreasing the degree of rotational torque transmission between the flywheel 10a and the clutch disc 21a.

By driving the direct-current electric motor (DC motor) 24 the clutch actuator 23 causes the rod 25 to move in a forward or backward direction and operates the clutch lever (release fork) 22. For example, in the initial state illustrated in Figure 1 a pressing load is imposed on the pressure plate 29 through a release bearing 27 and a diaphragm spring 28; and to this is added the pressing load of the clutch disc 21a imposed on the flywheel 10a. A condition is thereby reached in which it is possible to transmit rotation from the engine 10. In contrast, when the clutch lever (release fork) 22 is operated, the release bearing 27 moves to the flywheel 10a, the diaphragm spring 28 is deformed and in consequence there is a reduction in the degree of pressing load imposed by the clutch disc 21a on the flywheel 10a. Further, a clutch stroke sensor 26 can detect the degree to which the rod 25 is moved by the clutch actuator 23.

The automatic transmission 30 is provided with the input axle 31 and an output axle 32. The input axle 31 of the automatic transmission 30 is connected so as to be capable of transmitting power emanating from the friction clutch; and the output axle 32 is connected so as to be capable of transmitting power to a vehicle wheel shaft, which incidentally is not illustrated. Moreover, the automatic transmission 30 is provided with transmission actuators 41, 42 and 43 for purposes of carrying out changes of shift stages of the automatic transmission, and the driving of these transmission actuators makes possible a structure in which multiple shift change s can be achieved for the automatic transmission.

Furthermore, an output rotation sensor 37 that detects the number of rotations of the output axle 32 is provided near to the output axle 32 of the automatic transmission 30; and, on the basis of the number of rotations of the output axle detected, the speed of the vehicle (vehicle speed), acceleration ζ, and subsequent degrees of change in the acceleration ζ' (the rate of change of acceleration per unit of time) can all be calculated.

In addition, if one refers to the upper section of Figure 1, it will be observed that an accelerator pedal 14 is illustrated, the accelerator pedal provided inside the vehicle compartment and operated by the driver of the vehicle. Also provided are an acceleration sensor 15, which detects the extent to which the accelerator pedal is being operated, (the degree to which the accelerator pedal is depressed), and a road inclination sensor 51 that is provided in an appropriate place inside the vehicle and that detects an inclination θ of the road.

An electronic control unit (ECU) 50 is essentially made up of a micro-computer, in other words a central processing unit (CPU), and also contains units such as a ROM (read-only memory), in which a variety of programs, shift change maps, to be described later, and the like, are stored; a RAM (random access memory), with which it is possible to read and write various kinds of data; and an EEPROM (electrically erasable programmable read-only memory) that is capable of storing data without the need for a back-up source of electricity. In addition to the acceleration sensor 15, the clutch stroke sensor 26 and the output rotation sensor 37, all mentioned above, a variety of other sensors are connected, such as a throttle sensor, engine rotation sensor, input axle rotation sensor, a shift sensor and a gear sensor. On the basis of the programs installed therein, and more specifically on the basis of input values from the various sensors described above, the ECU 50 detects the condition in which the vehicle is being driven, factors such as the degree to which the throttle is opened (throttle opening degree); the degree to which the accelerator pedal is depressed; the number of engine revolutions; the state in which rotation is being transmitted by means of the friction clutch 21; the number of rotations of the input axle; the speed of the vehicle (vehicle seed); the shift position; and operation of the parking brakes. In accordance with the conditions in which the vehicle is being driven, and as evidenced by the results detected in each of the factors mentioned, the ECU 50 controls the idling speed control (IDC) valve, as well as the clutch actuator 23 and the transmission actuators 41, 42 and 43.

As one example, the ECU 50 can obtain the extent to which the accelerator pedal is being operated (the degree to which the accelerator pedal is opened or depressed) on the basis of a detection value of the acceleration sensor 15, and can drive the throttle actuator 13 in accordance with the degree to which the accelerator pedal has been operated. The amount of intake air for the engine 10 can be accordingly adjusted, and engine output can be secured appropriate to the operation of the accelerator pedal. As a further example, at a time of change in shift stage of the transmission, the ECU can drive the clutch actuator 23 and release the clutch 21, and, by driving the throttle actuator 13 can close the throttle valve 11. Then, by driving the transmission actuators 41, 42, and 45, the ECU 50 carries out a change of the gear train (change of shift stage).

Next, an explanation will be given, with reference to the drawings, about the shift change map used in the present embodiment. Figure 2 is a drawing illustrating a threshold line (map data), for purposes of judging whether or not, on the basis of a parameter chosen in advance as a shift change parameter (in this particular case two parameters, the vehicle speed and the degree to which the accelerator pedal is depressed), a shift needs to be changed from a first shift stage to a second shift stage. For instance, in circumstances where the actual shift stage is a first shift stage, this threshold line is used as a point of reference, and it the degree of depression of the accelerator pedal is 50%, in circumstances where the vehicle speed has exceeded 30 kilometers per hour, a judgment can be that the shift stage of the transmission should be changed to the second shift stage. In contrast, a different change of shift stage curve (not illustrated) is used as a point of reference for deciding, in circumstances where the actual shift stage of the transmission is the second shift stage, whether or not a shift needs to be changed to the first shift stage, a change of shift stage curve established in such a way that, in circumstances where a lower degree of opening of the accelerator pedal, and a lower shift stage, are reached, a downward shift (down-shift) can be made.

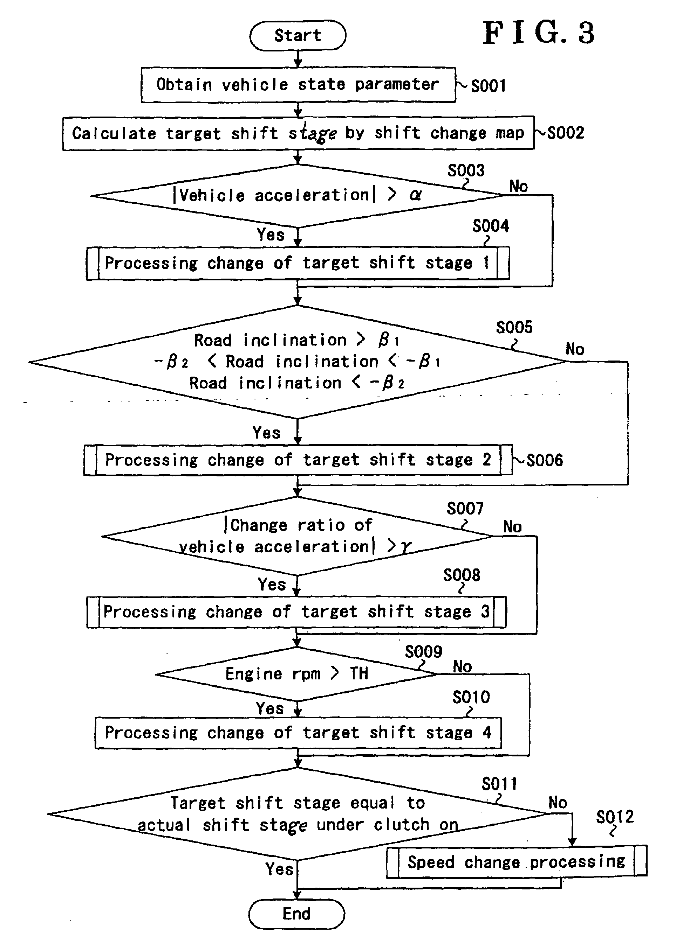

Next, an explanation will be given, with reference to the drawings, concerning the operation of the transmission control device of the automatic transmission of this embodiment. Figure 3 is a flow chart illustrating an outline of processes that the ECU 50 executes within an automatic transmission shift range, every determined interval. In the first instance, and as shown in Figure 3, as well as obtaining the vehicle speed, the inclination of the road and the degree of depression of the accelerator pedal, through the output rotation sensor, the road inclination sensor, and the accelerator pedal sensor respectively, the ECU 50 calculates from the vehicle speed, the degree of acceleration of the vehicle, and also the change in the degree of acceleration per time unit (step S001).

Next, by referring to the shift change map illustrated in Figure 2, the ECU 50 calculates a target shift stage on the basis of the vehicle speed and the degree of depression of the accelerator pedal (step S002).

Thereafter, the ECU 50 judges whether or not the absolute value of the degree of acceleration of the vehicle calculated in step S001 is higher than a threshold value α (step S003). In circumstances where the absolute value of the degree of acceleration of the vehicle is higher than the threshold value α, in the form of the target shift change processing 1, the ECU 50 changes the target shift stage on the basis of the degree of acceleration of the vehicle calculated in step S001 (step S004). In circumstances where the degree of acceleration exceeds a predetermined value in a positive direction, the target change of shift stage calculated in step S002 is changed to the next down shift stage (down-shift), and in circumstances where the degree of acceleration exceeds a predetermined value in a negative direction, the target shift stage calculated in step S002 is adjusted to the next step upwards (up-shift).

Following on from this, the ECU 50 makes a judgment as to whether or not a need exists for an adjustment based on the degree of inclination of the road calculated in step S002. In this context, when the inclination of the road is a significant value, in the form of the target shift change processing 2, the ECU 50 adjusts the target shift stage on the basis of the degree of inclination of the road calculated in step S001 (step S006). In circumstances where the degree of inclination of the road exceeds a predetermined value β1 (when a vehicle is climbing up a hill), in circumstances where the degree of inclination is between a predetermined value β1 and a predetermined value β2, and the latest change of shift stage step is a high-shift change (when a vehicle is climbing up a gradual slope in a high-shift stage gear), or alternatively in circumstances where the degree of inclination of the road exceeds a predetermined value β2 (when a vehicle is climbing up a steep hill), the target change of shift stage calculated in step S002 is adjusted one shift stage upwards (up-shift).

The ECU 50 next makes a judgment as to whether or not the absolute value of the degree of acceleration of the vehicle, as calculated in step S001, exceeds a threshold value γ (step S007). In circumstances where the absolute value of the degree of acceleration of the vehicle does exceed the threshold value γ, in the form of the target shift change processing 3, the ECU 50 adjusts the target change of shift stage on the basis of the change ratio of acceleration of the vehicle calculated in step S001 (step S008). As one instance, in circumstances where the change ratio of acceleration of the vehicle exceeds the predetermined value in a positive direction, the target change of shift stage calculated in step S002 is adjusted one shift stage downwards (down-shift), and in circumstances where the degree of acceleration exceeds a predetermined value in a negative direction, the target change of shift stage calculated in step 2 is adjusted to the next shift stage upwards (up-shift).

The ECU 50 continues by making a judgment as to whether or not the number of engine rotations (rpm) obtained from the number of engine rotation sensor exceeds a threshold value TH (step S009). In circumstances where the number of engine rotations exceeds the threshold value TH, in the form of the target shift change processing 4, the ECU 50 adjusts the target change of shift stage one step upwards (step S010). The reasons for this are that whenever the number of engine rotations exceeds the predetermined value, it may be assumed that the rate of acceleration itself is falling off; and, moreover, that if, as a result of the calculation processes of the target change of shift stage, and the change processing performed during the various steps described above, an attempt is made to maintain the same target change of shift stage, even in the event of a judgment that an actual downward shift should be made, excessive rotations of the engine (over-revolving) still need to be prevented, and an upward shift accordingly needs to be made.

Moreover, when the clutch is on, the ECU 50 makes a judgment as to whether or not the target change of shift stage, obtained as a result of the calculation processing and the change processing performed during the steps described above, is identical to the actual change of shift stage (step S011). In circumstances where the two shift stages are identical, transmission control is performed (step S012).

As described above, according to this embodiment, in circumstances where the degree of acceleration of the vehicle is high, or in circumstances where a judgment is made to the effect that a vehicle is climbing a hilly road, or is coming down a hilly road in a high-shift stage gear condition, the target shift stage (target shift change gear) is adjusted to a low-shift stage gear, and the end result is that the timing of the upward shift can be delayed. In contrast, in circumstances where the degree of acceleration of the vehicle is diminishing substantially, in circumstances where, when a vehicle is descending a hilly road, a judgment is made to the effect that a change of shift stage is too low, or in circumstances where the degree of the change ratio of acceleration has moved in a negative direction, the target change of shift stage is adjusted to a high-shift stage gear, and the end result is that the timing of the upward shift can be speeded up.

Since, as described above, target change of shift stage gears can be adjusted according to the acceleration of the vehicle, the degree of inclination of the road and the change ratio of acceleration of the vehicle, the end result is that a change of shift stage gear can be selected according the wishes of the driver. In the embodiment described above, target changes of shift stage gears are decided by use of a change of shift stage map that has determined the relationships that should exist between the vehicle speed, the degree of depression of the accelerator pedal and a target change of shift stage gear, and by then deciding on the target change of shift stage gear in accordance with the vehicle speed and the degree of depression of the accelerator pedal; and corrections of the target change of shift stage gear can then be made according to the degree of acceleration of the vehicle, the degree of inclination of the road and change ratio of acceleration of the vehicle. However, it is acceptable for the change of shift stage map to calculate the target change of shift stage gear on the basis of two or more factors from among the vehicle speed, the degree of depression of the accelerator pedal and the degree of acceleration of the vehicle; and to choose as a supplementary parameter, at least one item from the degree of inclination of the road and the change ratio of acceleration of the vehicle. (It is, incidentally, also possible to add an item that is not being used in the change of shift stage map mentioned above.) It then also becomes possible to adopt a configuration in which corrections to the target changes of shift stage gears can be made on the basis of these factors.

### Second Embodiment

In relation to other embodiments based on the principles of the present invention, an explanation will be given in which will be omitted any parts that overlap with the first embodiment of the present invention that has already described.

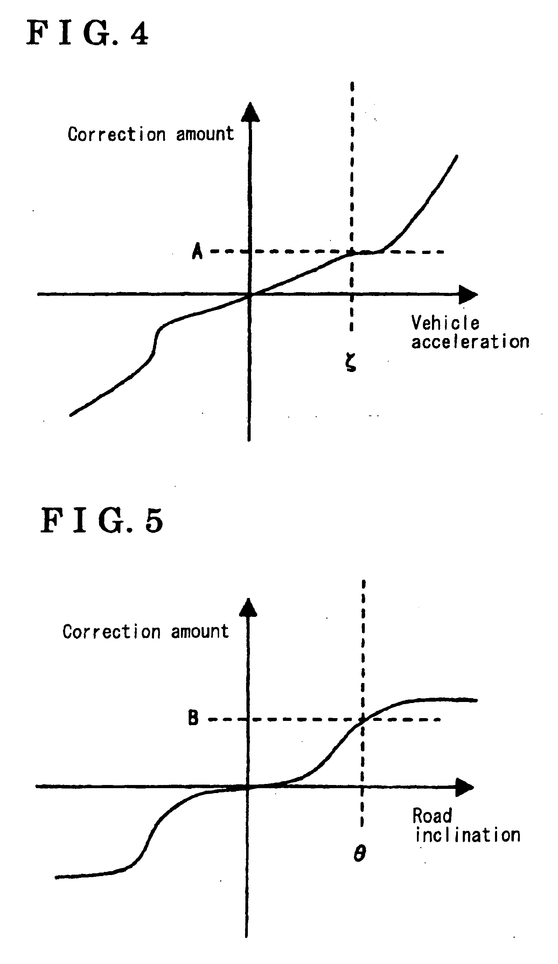

The ECU 50 of the automatic transmission device according to the present embodiment is of the same type of configuration as that provided in the first embodiment, as described above. However, it is different insofar that in its ROM, in addition to the change of shift stage map, a correction map is stored determining the relationship between the shift change correction parameter and a correction amount, as illustrated in Figures 4, 5 and 6.

Next an explanation will be offered, with reference to the drawings, concerning the correction map used in this embodiment. Figure 4 represents a correction map in which a correction amount is determined for the purpose of adjusting the speed of the vehicle, in order to correspond with the degree of acceleration of the vehicle. For instance, in circumstances where the degree of acceleration of the vehicle is ζ, it is possible to obtain a correction amount A that has a positive correlation with the size of ζ. Furthermore, as can be seen in the correction map in Figure 4, as the degree of acceleration of the vehicle proceeds in a significantly negative direction, the correction map is set in such a way that a negative correction width increases correspondingly.

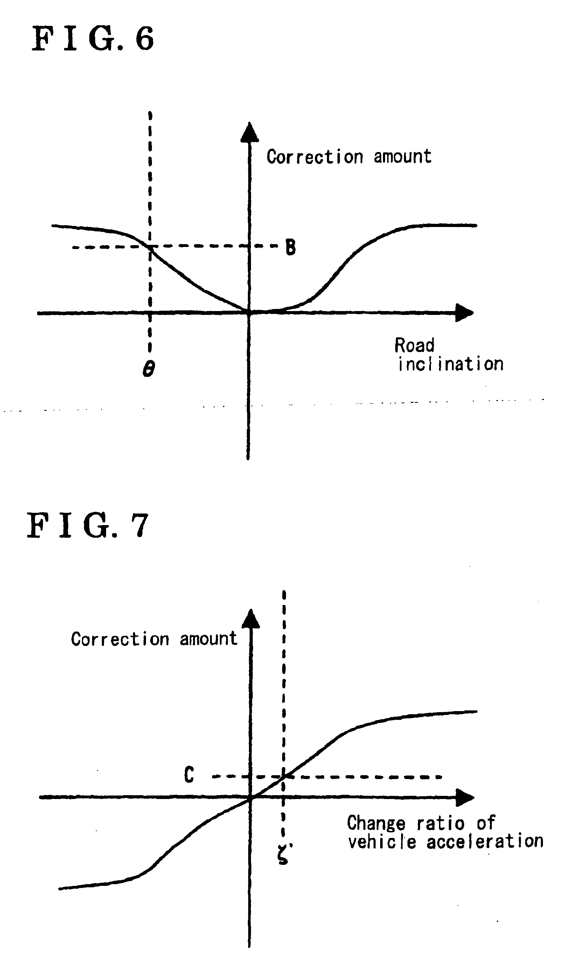

Figures 5 and 6 are examples of a correction map in which a correction amount is determined for purposes of correcting the speed of the vehicle to correspond with the degree of inclination of a road. Figure 5 illustrates a low-shift stage gear, and Figure 6 a high-shift stage gear. With reference to Figure 5, in circumstances where, when a vehicle is being driven in a low-shift stage gear condition, the degree of inclination of a road is θ, it is possible to obtain a correction amount B that has a positive correlation with the degree of angle θ. Furthermore, as can be seen in the correction map for the low-shift stage gear, and as is illustrated in Figure 5, in circumstances where the degree of inclination is negative, in other words at a time when a vehicle is descending an inclined road, as the incline becomes increasingly steeper, the correction map is set in such a way that a negative correction width increases correspondingly. In contrast, and with reference to Figure 6, even in circumstances where the degree of inclination is θ, a correction map is set in such a way that a positive correction amount B can still be obtained, and even in the case of a vehicle's descending an inclined road in a high-shift stage gear condition, as the inclination becomes increasingly steeper, the correction amount increases commensurately.

Figure 7 represents a correction map in which a correction amount is determined for purposes of correcting the shift stage of the vehicle to correspond with the change ratio of acceleration of the vehicle. For instance, in circumstances where the change ratio of acceleration of the vehicle is ζ' (=d ζ / d t), it is possible to obtain a correction amount C that has a positive correlation with the size of ζ'. Furthermore, as can be seen in the correction map illustrated in Figure 7, in circumstances where the degree of acceleration of the vehicle proceeds in a significantly negative direction, the correction map is set in such a way that a negative correction width increases correspondingly.

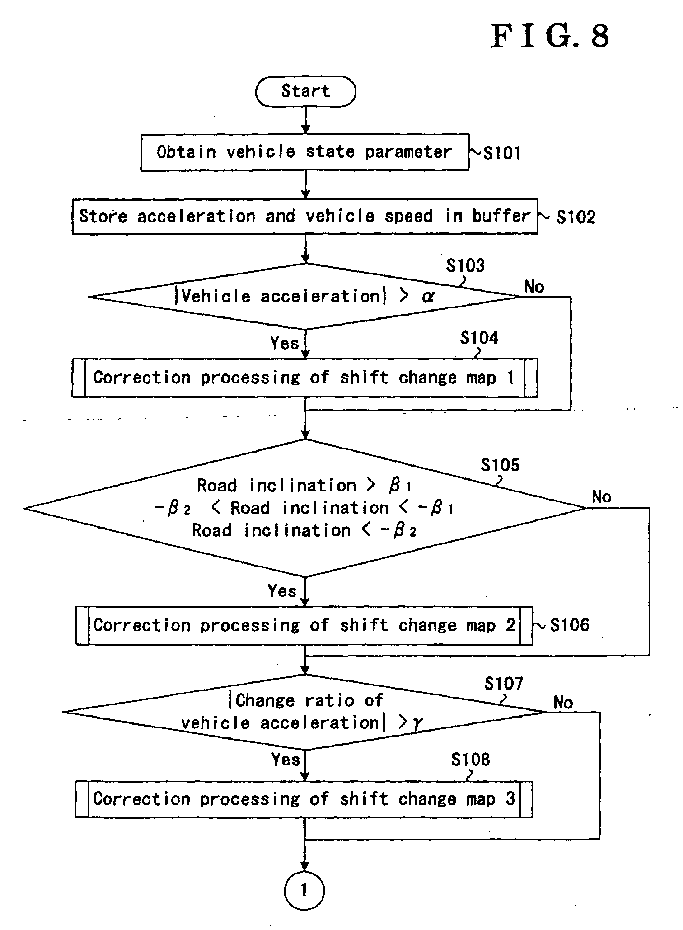

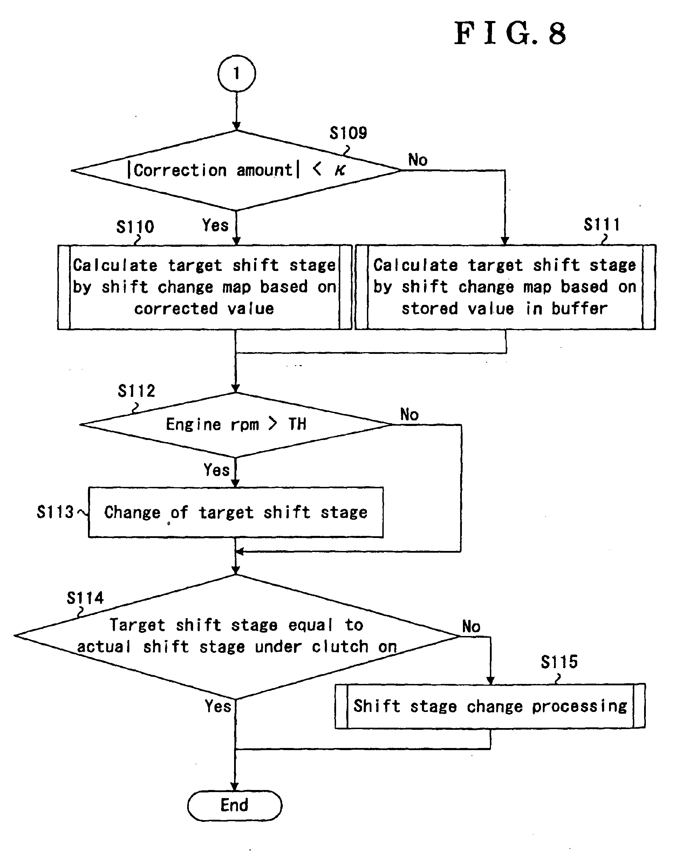

Figure 8 is a flow chart representing an outline of processing undertaken at predetermined intervals by the ECU 50 of the automatic transmission device of the second embodiment. As can be seen in Figure 8, in the same way as in the first embodiment described above, the ECU 50 first obtains the speed of the vehicle, the degree of inclination of the road, and the degree of depression of the accelerator pedal, respectively from the output rotation sensor 37, the road inclination sensor 51 and the degree of depression of the accelerator pedal sensor; and from the speed of the vehicle the ECU 50 calculates the degree of acceleration and the change ratio of acceleration (step S101). Subsequently the ECU 50 stores the degree of depression of the accelerator pedal and the speed of the vehicle in the buffer (step S102).

Next, the ECU 50 makes a judgment as to whether or not the absolute value of the degree of acceleration of the vehicle calculated in step S101 exceeds the threshold value a (step S103). In circumstances where the absolute value of the degree of acceleration of the vehicle calculated in step S101 exceeds the threshold value a, in the form of a correction processing 1 of the change of shift stage map, and as can be seen on the correction map illustrated in Figure 4, the ECU 50 obtains a correction amount A corresponding to the degree of acceleration of the vehicle calculated in step S001 (step S104).

Next, the ECU 50 makes a judgment as to whether or not an adjustment has been made in accordance with the degree of inclination of the road calculated in step S101. In circumstances where the absolute value of the degree of acceleration of the vehicle calculated in step S101 exceeds the threshold value β, in the form of a correction processing 2 of the change of shift stage map, and as can be seen on the correction maps illustrated in Figures 5 and 6 corresponding to the existing change of shift stage gear, the ECU 50 obtains a correction amount B corresponding to the degree of inclination of the road calculated in step S001 (step S106). As an instance, in circumstances where the degree of inclination of the road is positive (when a vehicle is climbing a hilly road), in circumstances where the existing change of shift stage gear is a high-shift stage gear, and the degree of inclination of the road is positive (when a vehicle is descending a hilly road in a high-shift stage gear), a positive correction amount can be obtained, or in circumstances where the existing change of shift stage gear is a low-shift stage gear, and the degree of inclination of the road is negative (when a vehicle is descending a hilly road in a low-shift stage gear), a negative correction amount can be obtained.

Next, the ECU 50 makes a judgment as to whether or not an absolute value of the degree of change in the acceleration of the vehicle exceeds a threshold value (step107). In circumstances where the absolute value of the change ratio of acceleration of the vehicle calculated in step S101 exceeds a threshold value γ, in the form of a correction processing 3 of the change of shift stage map, and as can be seen on the supplementary map in Figure 7, the ECU 50 obtains a correction amount C corresponding to the change ratio of acceleration of the vehicle calculated in step S101 (step S108).

The ECU 50 next makes a judgment as to whether or not the sum total of the correction amounts A, B and C referred to above is inferior to (smaller than) a threshold value κ (step S109). In circumstances where the sum total of the correction amounts A, B and C referred to above is inferior to a threshold value κ (a positive judgment in step S109), the ECU 50 adds the correction amounts A, B and C to the speed of the vehicle calculated in step S101, obtains a correction speed of the vehicle, and calculates a target change of shift stage gear on the basis of a combination of this corrected vehicle speed and the degree of depression of the accelerator pedal (step S109). In circumstances where, in contrast, the sum total of the correction amounts A, B and C referred to above exceeds the threshold value κ (a negative judgment in step S109), the ECU 50 does not perform the correction processing of the vehicle speed, but rather calculates a target change of shift stage gear on the basis of a combination of the corrected vehicle speed and the degree of depression of the accelerator pedal (step S111). The reason for this is to prevent the correction amounts becoming excessive and an extreme change of shift stage gear being selected.

The ECU 50 next makes a judgment as to whether or not the number of engine rotations obtained from the engine rotations sensor, which, incidentally, is not illustrated, exceeds a threshold value TH (step S112). In circumstances where the number of engine rotations obtained from the engine rotation sensor exceeds the threshold value TH, in the form of a correction processing of the target change of shift stage gear, the ECU 50 performs processing so as to raise the target change of shift stage gear by one (step S113). The reasons for this are that, in circumstances where the number of engine rotations exceeds a predetermined value, it is believed that the degree of acceleration itself diminishes; or, alternatively, that in circumstances where, as a result of either the processing calculating the target change of shift stage gear, or of the correction processing, processing that has been performed during the various gears described above, an attempt is made to maintain the same change of shift stage gear, even in the event of a judgment to the effect that there should be a downward shift, excessive rotations of the engine (over- revolving) still need to be prevented, and an upward shift accordingly needs to be made.

Moreover, the ECU 50 makes a judgment as to whether or not, when the clutch is operating, the target change of shift stage gear obtained as a result of either the processing calculating the target change of shift stage gear, or the correction processing, processing that has been performed during the various steps described above, is identical to the actual change of shift stage gear (step S114). In circumstances where the target change of shift stage gear and the actual change of shift stage gear are not identical, control of the change of shift stage is performed (step S115).

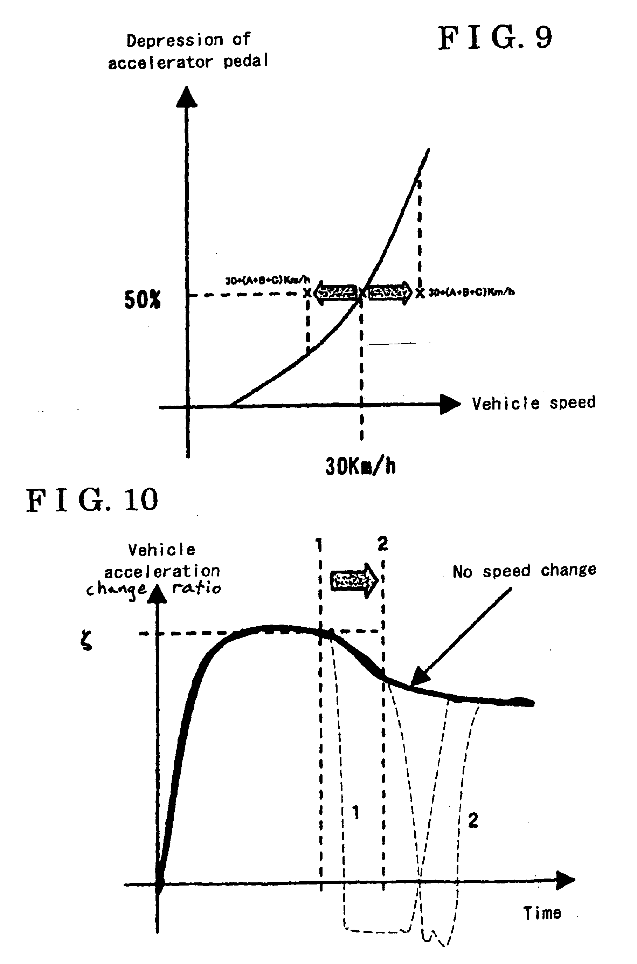

Figure 9 is a drawing illustrating the correction processing of the change of shift stage map in the present embodiment. If one were to apply a duly correction vehicle speed to the change of shift stage curve in Figure 2, and if, for example, the degree of depression of the accelerator pedal were 50%, and the speed of the vehicle 30 Km/h, according to methods used in related art a judgment needed to be made that an upward shift to the second shift stage was required. However, according to the present embodiment, in circumstances where the acceleration of the vehicle is high, or, alternatively, in circumstances such as where a vehicle is climbing a hilly road, or it can be judged that a vehicle is descending a hilly road with a high-shift stage gear, whenever the change ratio of acceleration of the vehicle has proceeded in a positive direction, positive reinforcement of the speed of the vehicle is performed, in a right-hand direction in the same Figure illustrated, and the timing of the upward shift is delayed. In contrast, where the acceleration of the vehicle has proceeded in a significantly negative direction, or, alternatively it is judged that a vehicle is descending a hilly road in a low-shift stage gear, whenever the change ratio of acceleration of the vehicle has proceeded in a negative direction, negative compensation of the speed of the vehicle is performed, in a left-hand direction in the same Figure illustrated, and the timing of an upward shift can be advanced.

Figure 10 is a drawing illustrating the behavior of a vehicle (the change ratio of acceleration ζ of the vehicle) being driven up a hilly road of a road inclination θ with the degree of depression of the accelerator pedal being 50%. As in the case of related art, line 1 on Figure 10 represents the change ratio of acceleration ζ of a vehicle in circumstances where the target change of shift stage gear has been calculated on the basis of the vehicle speed and the degree of depression of the accelerator pedal. As a result of an upward shift being made at a Point 1 (30 Km/h) in the upper section of the same Figure, a characteristic sense of "drawing back" on the part of an automatic manual transmission is clearly apparent. In contrast, line 2 on the same Figure represents change ratio of acceleration of a vehicle in circumstances where a target change of shift stage gear is calculated after correction processing has been performed, not only in respect of the speed of the vehicle and the degree of depression of the accelerator pedal, but also in respect of the degree of acceleration of the vehicle, the degree of inclination of the road and the change ratio of acceleration of the vehicle. In this case, an upward shift is performed at a Point 2, a timing representing 30 Km/h plus a correction amount, a point that is set at a sufficient interval from the Point 1 referred to above; and a pattern of behavior on the part of the vehicle is thereby obtained that avoids creating the characteristic sense of drawing back on the part of an automatic manual transmission.

Thus, according to the present embodiment, it becomes possible to perform a linear differentiation according to the degree of acceleration of the vehicle, the inclination of a road and the change ratio of acceleration of the vehicle, and, in contrast with the first embodiment described above, it becomes possible to select a more refined change of shift stage gear, and apply appropriate correction processing. For instance, in circumstances where the degree of acceleration of the vehicle, or the change ratio of acceleration of the vehicle, exceeds a predetermined value in a positive sense, or in circumstances where a high-shift stage gear and an inclination of a road exceed predetermined values in a negative sense, not only can an upward shift be further held back so as to conform to those values but also a downward shift becomes easier to undertake. Moreover, in circumstances where the degree of acceleration of the vehicle, or the change ratio of acceleration of the vehicle, exceeds a predetermined value in a negative sense, or in circumstances where a low-shift stage gear and an inclination of a road exceed predetermined values in a negative sense, not only is an upward shift corresponding to those values easier to undertake, but control can also be effected in such a way as to constrain a downward shift more easily.

Furthermore, in the embodiment described above, three types of correction maps are prepared to correct the speed of the vehicle, and are used for that purpose, but it is also possible to prepare a correction map for purposes of adjusting the degree of depression of the accelerator pedal and, after correcting the degree of depression of the accelerator pedal, to calculate the target change of shift stage gear. It is also possible to arrange matters in such a way that an appropriate balance of both the speed of the vehicle and the degree of depression of the accelerator pedal can be adjusted. Further, in the embodiment described above three types of correction maps are prepared, for the degree of acceleration of the vehicle, for the degree of inclination of the road, and for the change ratio of acceleration of the vehicle, but, even when one, or two, of the three types is used, it is still possible to obtain satisfactory results. Furthermore, in place of the correction maps, it is also possible to adopt a method of settling on correction coefficient k appropriate to the degree of acceleration of a vehicle, to the degree of inclination of a road, and to the change ratio of acceleration of a vehicle, preferably rates appropriate to each change of shift stage gear, and to then calculate correction amounts by applying these correction rates to actual values.

Moreover, in the various embodiments described above, target changes of shift stage gears are decided on the basis of the speed of the vehicle and the degree of depression of the accelerator pedal, and then adjustments to target changes of shift stage gears and adjustments of change of shift stage maps (corrections to the speed of a vehicle) are made on the basis of the degree of acceleration of a vehicle, the degree of inclination of a road and the change ratio of acceleration of a vehicle. However, a change of shift stage map is acceptable if it is possible to calculate the target change of shift stage gear from just two of the three factors, in other words, the speed of the vehicle, the degree of opening of the accelerator pedal and the degree of acceleration of the vehicle. Moreover, it is also possible to select as a correction parameter at least one item from between the degree of inclination of a road and the change ratio of acceleration of a vehicle, (it is possible to include also an item not utilized in the above-mentioned change of shift stage map), and then adopt a configuration in which the target change of shift stage gear can be adjusted on this basis.

Moreover, in the various embodiments described above, in circumstances where the degree of acceleration of a vehicle exceeds a predetermined value, an explanation has been given in terms of correcting a change of shift stage map in the direction of lowering a target change of shift stage gear by one gear, and in terms of delaying the timing of an upward shift. However, in circumstances where the degree of acceleration of a vehicle is sufficiently high, it is acceptable to add a control of the type that prevents an upward shift. Furthermore, in the embodiments, in circumstances where the degree of acceleration of the vehicle does not reach a predetermined value, an explanation has been given in terms of raising a target change of shift stage gear by one gear, and in terms of adjusting a change of shift stage map in the direction of raising a target change of shift stage gear by one gear, and in terms of advancing the timing of an upward shift. However, in circumstances where the degree of acceleration of a vehicle is low, and, in conditions where the speed of a vehicle is high, it is acceptable to make a judgment to the effect that a vehicle has moved into a state of stable driving at a high speed and to add a control of the type that carries out an upward shift, that is, raises the target change of shift stage gear.

Additionally, in the embodiments described above, an explanation has been given in terms of adjusting, in circumstances where the change ratio of acceleration of a vehicle is inferior to a predetermined value, a change of shift stage map in the direction of lowering a target change of shift stage gear by one gear, and in terms of advancing the timing of an upward shift. However, in the case of a downward inclination, or in circumstances where it is judged that a kind of situation has arisen where, for instance, an actual change of shift stage gear is a low-shift stage gear, and a brake needs to be applied, or, alternatively, in circumstances where a driver has performed an operation requiring a brake to be applied, such as depressing down on a brake, it is acceptable to add a control of the type that can lower a target change of shift stage gear by one gear, and that can delay the timing of an upward shift

In addition, in the embodiments described above, an explanation has been given in terms of adjusting, in circumstances where the change ratio of acceleration of a vehicle exceeds a predetermined value, a change of shift stage map in the direction of lowering a target change of shift stage gear by one gear, and in terms of delaying the timing of an upward shift. However, in circumstances where the change ratio of acceleration is significant in a positive direction, in the same way as in the case of the acceleration of a vehicle described above, it is acceptable to add control of the kind that prevents an upward shift. Moreover, in the various embodiments described above, an explanation has been given in terms of adjusting, in circumstances where the change ratio of acceleration of a vehicle is inferior to a predetermined value, a change of shift stage map in the direction of raising a target change of shift stage gear by one gear, and in terms of advancing the timing of an upward shift. However, in circumstances where the change ratio of acceleration is negative, in the same way as in the case of the acceleration of a vehicle described above, it is acceptable to add control of the kind that carries out an upward shift (that raises the target change of shift stage gear).

Furthermore, in the case of the embodiments described above, with regard to the speed of the vehicle, the acceleration of the vehicle and the degree of change in the degree of acceleration of the vehicle, an explanation has been given in terms of calculating the number of rotations of the output axle obtained from the output rotation sensor 37. However, it is acceptable to make calculations on the basis of a speed of vehicle sensor, a speed of a vehicle wheel sensor or a degree of acceleration sensor, and it is also possible to make assumption on the basis of factors such as the number of input rotations.

An additional point concerns the inclination θ of a road described in the various embodiments above. An explanation has been given in terms of using an inclination of road sensor. However, it is also possible to calculate the inclination θ with a device such as a height of front and rear wheel sensors and to make assumption on the basis of the relationship between the driving force and the acceleration of the vehicle.

According to the embodiments of the invention, optimal shift change timing can be achieved during the vehicle running. In more detail, the selected shift stage may be maintained even when the vehicle speed or the accelerator pedal depression amount is above a preset value, if the vehicle is running with the acceleration. On the other hand, even when the acceleration is below the preset value, if the vehicle is running under a stable condition with a constant vehicle speed, the up-shift can be achieved to finely control the shift change operation.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A shift change control device for an automatic transmission (30) comprising:
an automatic clutch mechanism (20) having a clutch (21) and a clutch actuator (23) for actuating the clutch release and engaging operations;
a shift change actuator (41, 42, 43) for actuating shift change of the automatic transmission (30); and,
a control portion (50) for controlling the automatic clutch mechanism (20) and the automatic transmission (30) by driving the clutch actuator (23) and the shift change actuator (41, 42, 43), wherein
the control portion controls the shift change by calculating a target shift stage on the basis of a vehicle speed and the degree of depression of an accelerator pedal, and by changing the shift stage based on the combination of at least three parameters which are one of an accelerator pedal depression amount, the vehicle speed, a vehicle acceleration, a road inclination and a change ratio of the vehicle acceleration and which include at least one of the accelerator pedal depression amount, the vehicle speed and the vehicle acceleration and at least one of the road inclination and the change ratio of the vehicle acceleration, and adjusts the target shift stage on the basis of at least one shift change correction parameter of the vehicle acceleration, the road inclination and the change ratio of the vehicle acceleration, **characterized in that**
the control portion judges whether or not the absolute value of the degree of acceleration of the vehicle is higher than a predetermined threshold value α, in circumstances where the degree of acceleration exceeds the predetermined value α in a positive direction, the target change of shift stage is changed to the next down shift stage, and in circumstances where the degree of acceleration exceeds the predetermined value α in a negative direction, the target shift is adjusted to the next step upwards,
the control portion sets a first predetermined value β1 and a second predetermined value β2 which absolute value is smaller than the first predetermined value for the road inclination and adjusts the target shift stage on the basis of the degree of inclination of the road, in circumstances where the degree of inclination of the road exceeds the predetermined value β1, in circumstances where the degree of inclination is between the predetermined value β1 and the predetermined value β2, and the latest change of shift stage step is a high-shift change, or alternatively in circumstances where the degree of inclination of the road exceeds the predetermined value β2, the target change of shift stage is adjusted one shift stage upwards,
and the control portion next makes a judgement as to whether or not the absolute value of the change ratio of acceleration of the vehicle exceeds a threshold value γ and in circumstances where the change ratio of acceleration of the vehicle exceeds the predetermined value γ in a positive direction, the target change of shift stage is adjusted one shift stage downwards, and in circumstances where the degree of acceleration exceeds a predetermined value γ in a negative direction, the target change of shift stage is adjusted to the next shift stage upwards.

2. The shift change control device according to claim 1, wherein the control portion includes a shift change map including a threshold line for judging whether a shift change from a certain shift stage to another is necessary or not by using at least two selected shift change parameters among from the accelerator pedal depression amount, the vehicle speed and the vehicle acceleration, and calculates a correction amount by multiplying an actually measured value of at least one shift change correction parameter of the road inclination and the change ratio of the vehicle acceleration by a correction coefficient "k",
the control portion judges whether a shift change is necessary or not based on the actually measured value associated with the selected shift change parameter and the shift change map in which the threshold line is shifted to an upper shift stage side by the correction amount, or
judges whether a shift change is necessary or not based on a corrected value obtained by adding the correction amount to the actually measured value of associated with the selected parameters and the shift change map.

3. The shift change control device according to claim 2, wherein the shift change map of the control portion is capable of judging whether a shift change from a certain shift stage to another is necessary or not by using the shift change parameters of the accelerator pedal depression amount and the vehicle speed, and the control portion further includes at least one correction map which is determined to increase the correction amount to be applied in response to the degree of the road inclination, whereby the control portion judges whether a shift change is necessary or not based on the actually measured value associated with the selected parameters and the shift change map by shifting the threshold line to an upper shift stage side by the correction amount, or
judges whether a shift change is necessary or not based on a corrected value obtained by adding the correction amount to the actually measured value of associated with the selected parameters and the shift change map.

4. The shift change control device according to claim 2 or 3, wherein the shift change map of the control portion is capable of judging whether a shift change from a certain shift stage to another is necessary or not by using the shift change parameters of the accelerator pedal depression amount and the vehicle speed, and control portion includes said at least one correction map which determines a relationship between the correction amount and the at least one of the shift change correction parameters of the road inclination and the change ratio of vehicle acceleration that the correction amount increases in the same directions in response to the increase of at least one of the shift change correction parameters of the road inclination and the change ratio of vehicle acceleration in a positive direction or the decrease thereof in a negative direction, whereby the control portion judges whether a shift change is necessary or not based on the actually measured value associated with the selected parameters and the shift change map by shifting the threshold line to an upper shift stage side by the correction amount or,
judges whether a shift change is necessary or not based on a corrected value obtained by adding the correction amount to the actually measured value associated with the selected parameters and the shift change map.

5. The shift change control device according to any one of claims 1 through 4, wherein,
the control portion changes a shift stage to lower shift stage by one shift stage when the road inclination θ exceeds the first predetermined value β1 or is between a negative value of the first predetermined value β1 and a negative value of the second predetermined value β2.

6. The shift change control device according to any one of claims 1 through 5, wherein,
the control portion sets a first correction amount "A" based on the vehicle acceleration, a second correction amount "B" based on the road inclination and a third correction amount "C" based on the change ratio of acceleration and determines the target shift stage by correcting the vehicle speed based on the total amount of the absolute value of the first, second and third correction amounts A, B and C.

7. The shift change control device according to claim 6, wherein the control portion sets no correction of the vehicle speed when the total amount of the absolute value of the first, second and third correction amounts exceeds a threshold value κ.

8. The shift change control device according to any one of claims 1 through 7, wherein,
the clutch actuator includes a DC motor (24) and a rod (25), whereby the clutch engagement and release operations are achieved by driving the DC motor thereby to advance or retract the rod.

## Patentansprüche

1. Gangschaltsteuerungseinrichtung für ein automatisches Getriebe (30), enthaltend:
einen Automatikkupplungsmechanismus (20), der eine Kupplung (21) und ein Kupplungsstellglied (23) zum Betätigen der Kupplungsfreigabe- und Eingriffsvorgänge aufweist;
ein Gangschaltstellglied (41, 42, 43) zum Betätigen des Gangschaltens des automatischen Getriebes (30); und
einen Steuerbereich (50) zum Steuern des Automatikkupplungsmechanismus (20) und des automatischen Getriebes (30) durch Antreiben des Kupplungsstellglieds (23) und des Gangschaltstellglieds (41, 42, 43), wobei
der Steuerbereich das Gangschalten steuert durch Berechnen einer Zielschaltstufe auf der Basis einer Fahrzeuggeschwindigkeit und dem Maß des Niederdrückens eines Fahrpedals, und durch Verändern der Schaltstufe basierend auf der Kombination vom mindestens drei Parametern, die einer sind aus der Menge des Niederdrückens eines Fahrpedals, der Fahrzeuggeschwindigkeit, einer Fahrzeugbeschleunigung, einer Straßenneigung und einem Änderungsverhältnis der Fahrzeugbeschleunigung, und die zumindest einen aus der Menge des Niederdrückens des Fahrpedals, der Fahrzeuggeschwindigkeit und der Fahrzeugbeschleunigung enthalten, und zumindest einen aus der Straßenneigung und dem Änderungsverhältnis der Fahrzeugbeschleunigung enthalten, und die Zielschaltstufe auf der Basis von zumindest einem Schaltänderungskorrekturparameter aus der Fahrzeugbeschleunigung, der Straßenneigung und dem Änderungsverhältnis der Fahrzeugbeschleunigung justiert,
**dadurch gekennzeichnet, dass**
der Steuerbereich beurteilt, ob der Absolutwert des Maßes der Beschleunigung des Fahrzeugs größer ist als ein vorbestimmter Schwellenwert α oder nicht, in Umständen, in denen das Maß der Beschleunigung den vorbestimmten Schwellenwert α in einer positiven Richtung übersteigt, die Zieländerung der Schaltstufe auf die nächst niedrigere Schaltstufe geändert wird, und in Umständen, in denen das Maß der Beschleunigung den vorbestimmten Wert α in einer negativen Richtung übertrifft, die Zielschaltstufe auf die nächste Stufe nach oben eingestellt wird,
der Steuerbereich einen ersten vorbestimmten Wert β1 und einen zweiten vorbestimmten Wert β2 für die Straßenneigung setzt, dessen Absolutwert kleiner ist als der erste vorbestimmte Wert, und die Zielschaltstufe auf der Basis des Maßes der Straßenneigung einstellt, in Umständen, in denen das Maß der Straßenneigung den vorbestimmen Wert β1 übersteigt, in Umständen, in denen das Maß der Neigung zwischen dem vorbestimmten Wert β1 und dem vorbestimmten Wert β2 ist, und die letzte Änderung des Schaltstufenschritts eine Hochschaltänderung ist, oder alternativ in Umständen, in denen das Maß der Straßenneigung den vorbestimmten Wert β2 übersteigt, die Zieländerung der Schaltstufe auf eine Schaltstufe nach oben eingestellt wird,
und der Steuerbereich als nächstes eine Beurteilung durchführt, ob der absolute Wert des Änderungsverhältnisses der Beschleunigung des Fahrzeugs einen Schwellenwert γ übersteigt oder nicht, und in Umständen, in denen das Änderungsverhältnis der Beschleunigung des Fahrzeugs den vorbestimmten Wert γ in einer positiven Richtung übersteigt, die Zieländerung der Schaltstufe auf eine Schaltstufe nach unten eingestellt wird, und in Umständen, in denen das Maß der Beschleunigung einen vorbestimmten Wert γ in einer negativen Richtung übersteigt, die Zieländerung der Schaltstufe auf die nächste Schaltstufe nach oben eingestellt wird.

2. Gangschaltsteuerungseinrichtung nach Anspruch 1, wobei der Steuerbereich eine Schaltänderungskarte enthält, die eine Schwellenlinie beinhaltet zum Beurteilen, ob ein Gangschalten von einer bestimmten Schaltstufe auf eine andere nötig ist oder nicht, indem zumindest zwei gewählte Schaltänderungsparameter aus der Menge des Niederdrückens des Fahrpedals, der Fahrzeuggeschwindigkeit und der Fahrzeugbeschleunigung verwendet werden, und eine Korrekturmenge berechnet, indem ein tatsächlich gemessener Wert von zumindest einem Schaltänderungskorrekturparameter aus der Straßenneigung und dem Änderungsverhältnis der Fahrzeugbeschleunigung mit einem Korrekturkoeffizient "k" multipliziert wird,
der Steuerbereich beurteilt, ob ein Gangschalten nötig ist oder nicht, basierend auf dem tatsächlich gemessenen Wert in Verbindung mit dem gewählten Schaltänderungsparameter und der Schaltänderungskarte, in der die Schwellenlinie zu einer oberen Schaltstufenseite um die Korrekturmenge verschoben wird, oder
beurteilt, ob ein Gangschalten nötig ist oder nicht, basierend auf einem korrigierten Wert, der durch Addieren der Korrekturmenge zu dem tatsächlich gemessenen Wert in Verbindung mit den gewählten Parametern und der Schaltänderungskarte, erhalten wird.

3. Gangschaltsteuerungseinrichtung nach Anspruch 2, wobei die Schaltänderungskarte des Steuerbereichs in der Lage ist zu beurteilen, ob ein Gangschalten von einer bestimmten Schaltstufe auf eine andere erforderlich ist oder nicht, indem die Schaltänderungsparameter der Menge des Niederdrückens des Fahrpedals und der Fahrzeuggeschwindigkeit verwendet werden, und der Steuerbereich weiter zumindest eine Korrekturkarte enthält, die bestimmt ist, die Korrekturmenge, die aufzubringen ist, in Abhängigkeit von dem Maß der Straßenneigung zu erhöhen, wobei der Steuerbereich beurteilt, ob ein Gangschalten erforderlich ist oder nicht, basierend auf dem tatsächlich gemessenen Wert in Verbindung mit den gewählten Parametern und der Schaltänderungskarte, indem die Schwellenwertlinie auf die Seite einer oberen Schaltstufe durch die Korrekturmenge verschoben wird, oder
beurteilt, ob ein Gangschalten erforderlich ist oder nicht, basierend auf einem korrigierten Wert, der durch Addieren der Korrekturmenge und des tatsächlich gemessenen Werts in Verbindung mit den gewählten Parametern und der Schaltänderungskarte erhalten wird.

4. Gangschaltsteuerungseinrichtung nach Anspruch 2 oder 3, wobei die Schaltänderungskarte des Steuerbereichs in der Lage ist zu beurteilen, ob ein Gangschalten von einer bestimmten Schaltstufe auf eine andere erforderlich ist oder nicht, indem die Schaltänderungsparameter der Menge des Niederdrückens des Fahrpedals und der Fahrzeuggeschwindigkeit verwendet werden, und der Steuerbereich die zumindest eine Korrekturkarte enthält, die ein Verhältnis zwischen der Korrekturmenge und dem zumindest einen der Schaltänderungskorrekturparameter der Straßenneigung und des Änderungsverhältnisses der Fahrzeugbeschleunigung bestimmt, dass die Korrekturmenge in den gleichen Richtungen entsprechend der Zunahme des zumindest einen Schaltänderungskorrekturparameters der Straßenneigung und des Änderungsverhältnisses der Fahrzeugbeschleunigung in einer positiven Richtung zunimmt oder entsprechend der Abnahme in einer negativen Richtung abnimmt, wobei der Steuerbereich beurteilt, ob ein Gangschalten erforderlich ist oder nicht, basierend auf dem tatsächlich gemessenen Wert in Verbindung mit den gewählten Parametern, und der Schaltänderungskarte, indem die Schwellenlinie zu einer oberen Schaltstufenseite um die Korrekturmenge verschoben wird, oder
beurteilt, ob ein Gangschalten erforderlich ist oder nicht, basierend auf einem korrigierten Wert, der durch Addieren der Korrekturmenge und des tatsächlich gemessenen Werts in Verbindung mit den gewählten Parametern und der Schaltänderungskarte erhalten wird.

5. Gangschaltsteuerungseinrichtung nach einem der Ansprüche 1 bis 4, wobei
der Steuerbereich eine Schaltstufe auf eine niedrigere Schaltstufe um eine Schaltstufe ändert, wenn die Straßenneigung θ den ersten vorbestimmten Wert β1 übersteigt oder zwischen einem negativen Wert des ersten vorbestimmten Werts β1 und einem negativen Wert des zweiten vorbestimmten Werts β2 ist.

6. Gangschaltsteuerungseinrichtung nach einem der Ansprüche 1 bis 5, wobei
der Steuerbereich eine erste Korrekturmenge "A" basierend auf der Fahrzeugbeschleunigung setzt, eine zweite Korrekturmenge "B" basierend auf der Straßenneigung setzt, und eine dritte Korrekturmenge "C" basierend auf dem Änderungsverhältnis der Beschleunigung setzt und die Zielschaltstufe durch Korrigieren der Fahrzeuggeschwindigkeit basierend auf der Gesamtmenge des Absolutwerts der ersten, zweiten und dritten Korrekturmenge A, B und C bestimmt.

7. Gangschaltsteuerungseinrichtung nach Anspruch 6, wobei der Steuerbereich keine Korrektur der Fahrzeuggeschwindigkeit festsetzt, wenn die Gesamtmenge des Absolutwerts der ersten, zweiten und dritten Korrekturmenge einen Schwellenwert κ übersteigt.

8. Gangschaltsteuerungseinrichtung nach einem der Ansprüche 1 bis 7, wobei
das Kupplungsstellglied einen Gleichstrommotor (24) und einen Stab (25) enthält, wobei der Kupplungseingriffs- und Freigabevorgang durch Antreiben des Gleichstrommotors erzielt werden, indem dadurch der Stab vorwärtsbewegt oder zurückgezogen wird.

## Revendications

1. Dispositif de commande de changement de vitesse pour une transmission automatique (30) comprenant :
un mécanisme d'embrayage automatique (20), ayant un embrayage (21) et un actionneur d'embrayage (23) pour actionner les opérations d'enclenchement et de relâchement de l'embrayage ;
un actionneur de changement de vitesse (41, 42, 43) pour actionner le changement de vitesse de la transmission automatique (30) ; et
une partie de commande (50) pour commander le mécanisme d'embrayage automatique (20) et la transmission automatique (30) en entraînant l'actionneur 'd'embrayage (23) et l'actionneur de changement de vitesse (41, 42, 43), dans lequel
la portion de commande commande le changement de vitesse, en calculant une étape de vitesse cible sur la base de la vitesse du véhicule et du degré de dépression d'une pédale d'accélérateur, et en modifiant l'étape de vitesse, sur la base de la combinaison d'au moins trois paramètres qui sont choisis parmi l'ampleur de la dépression d'une pédale d'accélérateur, la vitesse du véhicule, l'accélération du véhicule, une inclinaison de route et un rapport de changement de l'accélération du véhicule et qui comprennent au moins un élément parmi l'ampleur de la dépression de la pédale d'accélérateur, la vitesse du véhicule, et l'accélération du véhicule et au moins un élément parmi l'inclinaison de la route et le rapport de changement de l'accélération du véhicule, et ajuste l'étape de changement cible sur la base d'au moins un paramètre de correction du changement de vitesse parmi l'accélération du véhicule, l'inclinaison de la route et le rapport de changement de l'accélération du véhicule,
**caractérisé en ce que**
la partie de commande juge si la valeur absolue du degré d'accélération du véhicule est supérieure ou non à une valeur seuil prédéterminée α, dans des circonstances où le degré d'accélération dépasse la valeur α prédéterminée dans une direction positive, et dans des circonstances où le degré d'accélération dépasse la valeur α prédéterminée, dans une direction négative, la vitesse cible est ajustée à la prochaine vitesse supérieure,
la partie de commande règle une première valeur β1 prédéterminée et une seconde valeur β2 prédéterminée, dont la valeur absolue est inférieure à la première valeur prédéterminée pour l'inclinaison de la route et ajuste l'étape de vitesse cible sur la base du degré d'inclinaison de la route, dans des circonstances où le degré d'inclinaison de la route dépasse la valeur β1 prédéterminée, dans des circonstances où le degré d'inclinaison est compris entre la valeur β1 prédéterminée et la valeur β2 prédéterminée et le tout dernier changement d'étape de vitesse est un changement vers une vitesse élevée, ou en variante dans des circonstances où le degré d'inclinaison de la route dépasse la valeur β2 prédéterminée, le changement d'étape de vitesses cible est ajusté à une vitesse supérieure,
et la partie de commande juge ensuite si la valeur absolue du rapport de changement d'accélération du véhicule dépasse ou non une valeur seuil γ et, dans des circonstances où le rapport de changement d'accélération du véhicule dépasse la valeur prédéterminée γ dans une direction positive, ledit changement ciblé de l'étape de vitesse est ajusté à une vitesse inférieure, et dans des circonstances où le degré d'accélération dépasse une valeur γ prédéterminée dans une direction négative, le changement ciblé de l'étape de vitesse est ajusté à la prochaine vitesse supérieure.

2. Dispositif de commande de changement de vitesse selon la revendication 1, dans lequel la partie de commande comprend une carte de changement de vitesse comprenant une ligne de seuil permettant de juger si un changement de vitesse d'une certaine vitesse à une autre est nécessaire ou non, en utilisant au moins deux paramètres de changement de vitesse choisis parmi l'ampleur de la dépression de la pédale d'accélérateur, la vitesse du véhicule et l'accélération du véhicule, elle calcule une ampleur de correction en multipliant une valeur effectivement mesurée d'au moins un paramètre de correction de changement de vitesse parmi l'inclinaison de la route et le rapport de changement de l'accélération du véhicule par un coefficient de correction « k », la partie de commande juge si un changement de vitesse est nécessaire ou non, sur la base de la valeur effectivement mesurée, associée au paramètre de changement de vitesse choisi et de la carte de changement de vitesse, dans laquelle la ligne de seuil est changée vers une vitesse supérieure par l'ampleur de la correction, ou
juge si un changement de vitesse est nécessaire ou non, sur la base d'une valeur corrigée obtenue en ajoutant la quantité de correction à la valeur effectivement mesurée associée aux paramètres choisis et à la carte de changement de vitesse.

3. Dispositif de commande de changement de vitesse selon la revendication 2, dans lequel la carte de changement de vitesse de la partie de commande est capable de juger si un changement de vitesse d'une certaine étape de vitesse à une autre est nécessaire ou non, en utilisant les paramètres de changement de vitesse parmi l'ampleur de la dépression de la pédale d'accélération et la vitesse du véhicule, et la partie de commande comprend en outre au moins une carte de correction qui est déterminée pour augmenter l'ampleur de la correction à appliquer, en réponse au degré d'inclinaison de la route, moyennant quoi la partie de commande juge si un changement de vitesse est nécessaire ou non, sur la base de la valeur effectivement mesurée, associée aux paramètres choisis et à la carte de changement de vitesse, en modifiant la ligne de seuil vers un côté de vitesse supérieure selon l'ampleur de la correction, ou
juge si un changement de vitesse est nécessaire ou non, sur la base d'une valeur corrigée, obtenue en ajoutant l'ampleur de la correction à la valeur effectivement mesurée associée aux paramètres choisis et à la carte de changement de vitesse.

4. Dispositif de commande de changement de vitesse selon les revendications 2 ou 3, dans lequel la carte de changement de vitesse de la partie de commande est capable de juger si un changement de vitesse d'une certaine vitesse à une autre est nécessaire ou non, en utilisant les paramètres de changement de vitesse parmi l'ampleur de la dépression de la pédale d'accélérateur et la vitesse du véhicule, et la partie de commande comprend ladite au moins une carte de correction qui détermine une relation entre l'ampleur de la correction et lesdits au moins un paramètre de correction de changement de vitesse parmi l'inclinaison de la route et le rapport de changement de l'accélération du véhicule selon lequel l'ampleur de la correction augmente dans les mêmes directions, en réponse à l'augmentation d'au moins un des paramètres de correction de changement de vitesse parmi l'inclinaison de la route et le rapport de changement de l'accélération du véhicule dans une direction positive ou sa diminution dans une direction négative, moyennant quoi la partie de commande juge si un changement de vitesse est nécessaire ou non, sur la base de la valeur effectivement mesurée, associée aux paramètres choisis et à la carte de changement de vitesse, en déplaçant la ligne de seuil vers un côté d'étape de vitesse supérieure selon l'ampleur de la correction ou, juge si un changement de vitesse est nécessaire ou non, sur la base d'une valeur corrigée, obtenue en ajoutant l'ampleur de la correction à la valeur effectivement mesurée, associée aux paramètres choisis et à la carte de changement de vitesse.

5. Dispositif de commande de changement de vitesse selon l'une quelconque des revendications 1 à 4, dans lequel
la partie de commande change d'étape de vitesse en passant à une vitesse inférieure quand l'inclinaison de la route θ dépasse la première valeur β1 prédéterminée ou est comprise entre une valeur négative de la première valeur β1 prédéterminée et une valeur négative de la seconde valeur β2 prédéterminée.

6. Dispositif de commande de changement de vitesse selon l'une quelconque des revendications 1 à 5, dans lequel
la partie de commande règle une première ampleur de correction « A », sur la base de l'accélération du véhicule, une seconde ampleur de correction « B », sur la base de l'inclinaison de la route et une troisième ampleur de correction « C », sur la base du rapport de changement d'accélération et détermine l'étape de vitesse cible en corrigeant la vitesse du véhicule, sur la base de la quantité totale de la valeur absolue de la première, seconde et troisièmes ampleurs de correction A, B et C.

7. Dispositif de commande de changement de vitesse selon la revendication 6, dans lequel la partie de commande ne règle aucune correction de la vitesse du véhicule quand la quantité totale de la valeur absolue de la première, seconde et troisième ampleurs de correction dépasse une valeur de seuil κ.

8. Dispositif de commande de changement de vitesse selon l'une quelconque des revendications 1 à 7, dans lequel,
l'actionneur d'embrayage comprend un moteur DC (24) et une tige (25), moyennant quoi les opérations d'enclenchement et de relâchement de l'embrayage sont réalisées en commandant le moteur DC pour qu'il fasse avancer ou qu'il rétracte la tige.
